**Europäisches Patentamt**

**European Patent Office**

**Office européen des brevets**

(19)

(11) Veröffentlichungsnummer: **0 041 192**
**A1**

(12) # EUROPÄISCHE PATENTANMELDUNG

(21) Anmeldenummer: **81103924.7**

(22) Anmeldetag: **21.05.81**

(51) Int. Cl.³: **H 01 B 13/06**
**C 08 J 3/24**

(30) Priorität: **03.06.80 DE 3021044**

(43) Veröffentlichungstag der Anmeldung:
**09.12.81 Patentblatt 81/49**

(84) Benannte Vertragsstaaten:
**AT BE CH DE FR GB IT LI NL SE**

(71) Anmelder: **SIEMENS AKTIENGESELLSCHAFT Berlin
und München
Postfach 22 02 61
D-8000 München 22(DE)**

(72) Erfinder: **Kleeberg, Wolfgang, Dr.
Hessenstrasse 7
D-8520 Erlangen(DE)**

(72) Erfinder: **Hellmann, Klaus
Langfeldstrasse 40
D-8520 Erlangen(DE)**

(72) Erfinder: **Rubner, Roland, Dr.
Buchenring 15
D-8551 Röttenbach(DE)**

(72) Erfinder: **Wiedenmann, Rudolf, Dr.
Hartmannstrasse 8
D-8500 Nürnberg(DE)**

(54) **Verfahren zur Herstellung vernetzter Kabel- und Leitungsisolierungen und -mäntel.**

(57) Die Erfindung betrifft ein Verfahren zur Herstellung vernetzter Kabel- und Leitungsisolierungen und -mäntel auf der Basis von Polyolefinen und stellt sich die Aufgabe, ein derartiges Verfahren in der Weise durchzuführen, daß keine unter Vernetzungsbedingungen gasförmigen Nebenprodukte gebildet werden. Die Erfindung sieht dazu die Verwendung von hydroxylgruppenhaltigen Polyolefinen vor, die in Gegenwart verkappter Polyisocyanate, gegebenenfalls unter Zusatz von Additiven, auf Temperaturen etwa zwischen 150 und 250°C, vorzugsweise etwa zwischen 180 und 230°C, erhitzt werden.

EP 0 041 192 A1

SIEMENS AKTIENGESELLSCHAFT       Unser Zeichen
Berlin und München               VPA 80 P 7 5 3 5 E

Verfahren zur Herstellung vernetzter Kabel- und
Leitungsisolierungen und -mäntel

Die Erfindung betrifft ein Verfahren zur Herstellung vernetzter Kabel- und Leitungsisolierungen und -mäntel auf der Basis von Polyolefinen.

Bei der Herstellung von vernetzten Isolierungen und Mänteln von Kabeln und Leitungen erfolgt die Vernetzung der dabei verwendeten Polyolefine im allgemeinen mittels Peroxiden (vgl.: "Kunststoffe", Bd. 60, 1970, S.883 bis 889). Hierbei ergeben sich aber nicht unbeträchtliche Schwierigkeiten. Diese Schwierigkeiten betreffen zum einen die Handhabbarkeit: Die Toxizität der Peroxide kann zu Hautreizungen führen; da die Peroxide schon durch geringe Metallmengen bereits bei Raumtemperatur katalytisch zersetzt werden, ergeben sich hohe Anforderungen bezüglich der Reinheit; bei der Mischungsherstellung und -verarbeitung besteht, insbesondere bei erhöhter Temperatur, die Gefahr der Anvernetzung der Polymeren. Schwierigkeiten können sich, wenn nicht besondere Vorkehrungen, wie beispielsweise Arbeiten unter Druck, getroffen werden, ferner auch durch die Bildung gasförmiger Nebenprodukte während der Vernetzung ergeben, die zur Blasenbildung im vernetzten Produkt führen (DE-AS 24 41 373).

Es ist auch bekannt, Polyolefine durch Aufpfropfen von Vinylalkoxysilanen und anschließende Kondensation im Wasserbad zu vernetzen (vgl.: DE-AS 17 94 028 sowie "Wire Journal", Mai 1977, S. 88 bis 92). Kritisch sind hierbei - hinsichtlich einer Anvernetzung - die wasserfreie Lagerung und Verarbeitung der Mischungen sowie -

Bh 2 Dm / 29.5.1980

hinsichtlich der Vernetzungsgeschwindigkeit - die verhältnismäßig langsame Vernetzungsreaktion, die gegebenenfalls besondere Katalysatoren erfordert, und - in Bezug auf die elektrischen Eigenschaften der Kabel und Leitungen - die ausgedehnte Wasserlagerung bei erhöhter Temperatur nach der Formgebung.

Aufgabe der Erfindung ist es, die Vernetzung von Kabel- und Leitungsisolierungen und -mänteln auf der Basis von Polyolefinen in der Weise durchzuführen, daß die bislang auftretenden Schwierigkeiten vermieden und insbesondere keine unter Vernetzungsbedingungen gasförmigen Nebenprodukte gebildet werden und somit eine drucklose Vernetzung ermöglicht wird.

Dies wird erfindungsgemäß dadurch erreicht, daß hydroxylgruppenhaltige Polyolefine in Gegenwart verkappter Polyisocyanate, gegebenenfalls unter Zusatz von Additiven, auf Temperaturen etwa zwischen 150 und 250°C, vorzugsweise etwa zwischen 180 und 230°C, erhitzt werden.

Beim erfindungsgemäßen Verfahren erfolgt - mittels Polyisocyanaten - eine selektive Vernetzung der hydroxylgruppenhaltigen Polyolefine, und zwar über Urethanbrücken. Dieses Verfahren weist die den bekannten Verfahren anhaftenden Nachteile nicht auf, insbesondere werden bei der Vernetzung keine gasförmigen Produkte gebildet. Auf diese Weise können extrudierte Kabel- und Leitungsisolierungen sowie entsprechende Mäntel durch einen drucklosen Prozeß bei erhöhter Temperatur hergestellt werden. Bei diesem Verfahren kann die Vernetzung gegebenenfalls auch in Anwesenheit von Additiven, wie Füllstoffen, Extendern und Stabilisatoren, erfolgen.

Beim erfindungsgemäßen Verfahren dienen zur Vernetzung sogenannte Polyisocyanate oder polyfunktionelle Isocyanate, d.h. Verbindungen mit wenigstens zwei Isocyanatgruppen. Die Polyisocyanate werden dabei in verkappter Form eingesetzt. Unter "verkappten Polyisocyanaten" werden im Rahmen der vorliegenden Patentanmeldung Polyisocyanate verstanden, deren Isocyanatgruppen (-NCO) untereinander und/oder durch geeignete Verbindungen, sogenannte Verkappungskomponenten, chemisch reversibel gebunden sind. Die verkappten Polyisocyanate stellen somit Addukte aus Isocyanaten untereinander und/oder aus Verkappungskomponenten und Isocyanaten dar. Vorzugsweise werden beim erfindungsgemäßen Verfahren niedermolekulare bis oligomere Polyisocyanate eingesetzt. Ein oligomeres Produkt entsteht beispielsweise bei der Umsetzung von Propantriol mit einem Diisocyanat.

Die verkappten Polyisocyanate, die im folgenden auch als Vernetzer bezeichnet werden, sind lagerstabil gegen Wärme und Feuchte und können mit den Polyolefinen bei höheren Temperaturen anvernetzungsfrei gemischt und verarbeitet werden. Derartige Vorgemische sind über lange Zeiträume hinweg lagerfähig, d.h. über mehrere Monate. Bei höheren Temperaturen, insbesondere oberhalb 180°C, spalten sich erfindungsgemäß die verkappten Polyisocyanate unter Rückbildung der originären Funktionen wieder auf, d.h. es werden die freien Isocyanate zurückgebildet. Durch Reaktion der Isocyanate mit den Hydroxylgruppen der Polyolefine erfolgt dann eine rasche Vernetzung, die ohne Gasblasenbildung verläuft, und zwar im wesentlichen deshalb, weil der Dampfdruck der Verkappungskomponenten zur Gasblasenbildung nicht ausreicht.

Die beim erfindungsgemäßen Verfahren eingesetzten Polyolefine, vorzugsweise werden Olefincopolymere verwendet, weisen Hydroxylgruppen auf, wobei der Hydroxylgruppengehalt vorteilhaft etwa zwischen 0,1 und 10 Gew.-% liegt; vorzugsweise beträgt der Gehalt an Hydroxylgruppen etwa zwischen 0,1 und 3 Gew.-%.

Als Isolierungs- bzw. Mantelmaterial für die Kabel und Leitungen werden beim erfindungsgemäßen Verfahren, wie bereits ausgeführt, bevorzugt Olefincopolymere eingesetzt. Derartige Polyolefine können vorteilhaft durch partielle oder vollständige Verseifung von Äthylen-Vinylacetat-Copolymeren erhalten werden. Vorteilhaft können ferner Materialien verwendet werden, die durch Aufpfropfen olefinisch ungesättigter Alkohole auf Polyolefine, einschließlich Olefincopolymerer, hergestellt werden. Die Aufpfropfung erfolgt dabei im allgemeinen bei niederer Temperatur, aber oberhalb des Schmelzpunktes des Polyolefins, unter peroxidischer Initiierung. Ein derartiges Material entsteht beispielsweise durch Aufpfropfen von Allyloxyäthanol auf ein Polyäthylen mit der Dichte 0,92 g/cm$^3$ bei 150°C mittels 0,2 Gew.-% -tert.Butylperoxiisononanat.

Als Vernetzer dienen beim erfindungsgemäßen Verfahren aliphatische, cycloaliphatische, aromatische und/oder heterocyclische polyfunktionelle Isocyanate, einschließlich uretdion- und isocyanuratgruppenhaltiger Isocyanate; bevorzugt werden Diisocyanate eingesetzt. Beispielhaft seien hier folgende Polyisocyanate genannt: Hexamethylendiisocyanat als aliphatisches Isocyanat und Isophorondiisocyanat als cycloaliphatisches Isocyanat sowie Diphenylmethan-4.4'-diisocyanat und 1.3-Bis-(4'-methyl-3'-isocyanato-phenyl)-uretdion als aromatisches bzw. heterocyclisches Isocyanat. Vorteilhaft beträgt der Gehalt der Polyolefine an verkapptem Polyisocyanat etwa zwischen 1 und 15 Gew.-%, bezogen auf das Gesamtgewicht; vorzugsweise liegt der Gehalt etwa zwischen 2 und 8 Gew.-%.

Zur Verkappung der Polyisocyanate dienen im allgemeinen Verbindungen mit aktivem Wasserstoff, vorzugsweise werden Phenole, Alkohole, Lactame, Oxime und sekundäre Amine verwendet, wobei Lactame besonders bevorzugt werden.

Beispielhaft seien hier folgende Verkappungskomponenten genannt: 2.6-Di-tert.butyl-4-methylphenol, 4-tert.Butylphenol, m-Kresol und 4.4'-Thio-bis(3-methyl-6-tert.-butylphenol) sowie ε-Caprolactam und Benzophenonoxim.

Besonders vorteilhaft können beim erfindungsgemäßen Verfahren Vernetzer eingesetzt werden, bei denen das Polyisocyanat mit einem phenolischen oder aminischen Oxidationsinhibitor verkappt ist. Vorzugsweise dient als derartige Verkappungskomponente oligomeres 2.2.4-Trimethyl-1.2-dihydrochinolin. Vernetzer der genannten Art haben den Vorteil, daß bei der Aufspaltung neben dem Polyisocyanat, das zur Vernetzung dient, gleichzeitig auch ein Stabilisator für die Isolierungen bzw. Mäntel der Kabel und Leitungen freigesetzt wird. Von besonderem Vorteil ist es, wenn derartige Vernetzer zusammen mit anderen verkappten Polyisocyanaten eingesetzt werden.

Zur Freisetzung der Polyisocyanate aus dem Vernetzer können vorteilhaft Katalysatoren verwendet werden. Vorzugsweise dienen dazu tertiäre Amine, metallorganische Verbindungen, wie Dibutylzinndilaurat, und/oder Metallsalze, wie Manganacetat.

Anhand von Ausführungsbeispielen soll die Erfindung noch näher erläutert werden.

Die im folgenden beschriebenen Untersuchungen wurden, wenn nicht anders vermerkt, an Preßplatten durchgeführt. Die Ausgangskomponenten werden dazu vermischt, granuliert und dann zu Platten verpreßt. Die Mischungsherstellung erfolgt bei einer Temperatur von 130 bis 150°C, der Preßvorgang bei Temperaturen oberhalb 150°C. Die Beurteilung des Vernetzungsergebnisses erfolgt anhand von Vulkametermessungen (nach DIN 53 529), wobei die Änderung der Schubkraft ermittelt wird, und anhand der Bestimmung des Vernetzungsgrades. Zur Bestimmung des Vernetzungsgrades
wird die prozentuale Vernetzung (gemäß ASTM D 2765-68)
sowie die Wärmedehnung (bei 200°C/15 min und 20 N/mm$^2$
Belastung) festgestellt.

Das bei den Untersuchungen eingesetzte teilhydrolisierte
Äthylen-Vinylacetat- Copolymere, im folgenden als
"EVA hydr." bezeichnet wurde folgendermaßen hergestellt:
Äthylen-Vinylacetat- Copolymeres wird in siedendem Xylol
gelöst und dann mit alkoholischer Lauge bei 140°C verseift; anschließend wird das Hydrolyseprodukt, d.h.
EVA hydr., mit Methanol ausgefällt (vgl.: US-PS
2 983 696).

Beispiel 1 (Vergleichsversuch)

Teilhydrolysiertes Äthylen-Vinylacetat-Copolymeres
($MFI_{190/2}$ = 0,2) mit einem Ausgangsvinylacetatgehalt von
2,3 % (im folgenden mit "VAC" bezeichnet) und mit einem
Hydroxylgruppengehalt von 0,39 % (im folgenden mit "OH"
bezeichnet), d.h. EVA hydr. (2,3 % VAC)-0,39 % OH, wird
mit 1,1 Gew.-% unverkapptem Diphenylmethan-4.4'-diisocyanat (MDI) in einem Laborkneter bei 150°C vermischt.
Dabei beträgt die prozentuale Vernetzung nach der Mischungsherstellung 80 %, d.h. die Vernetzung erfolgt
bereits bei der Mischungsherstellung.

Beispiel 2 (Vergleichsversuch)

EVA hydr. (2,3 % VAC) - 0,39 % OH ($MFI_{190/2}$ = 0,2) wird,
wie in Beispiel 1, mit 0,77 Gew.-% unverkapptem
1.3-Bis(4'-methyl-3'-isocyanato-phenyl)-uretdion, d.h.
dimerisiertem Toluylendiisocyanat (TDI dim.), vermischt.
Dabei beträgt die prozentuale Vernetzung bereits nach der
Mischungsherstellung 78 %.

Beispiel 3

Polyäthylen der Dichte 0,92 g/cm$^3$ (MFI$_{190/2}$ = 0,2) mit
2 % peroxidisch aufgepropftem Allyloxyäthanol wird mit
4,2 Gew.-% eines Vernetzers in Form von mit $\varepsilon$-Caprolac-
tam verkapptem Diphenylmethan-4.4'-diisocyanat (MDI) vermischt, granuliert und nachfolgend bei 250°C während
15 min in einer Presse vernetzt. Die prozentuale Vernetzung beträgt nach der Mischungsherstellung 0 % und
nach dem Preßvorgang 56 %, d.h. während der Mischungsherstellung erfolgt keine Vernetzung.

Beispiel 4

EVA hydr.(2,3 % VAC) - 0,39 % OH (MFI$_{190/2}$ = 0,2) wird mit
6,36 Gew.-% eines Vernetzers in Form von mit 2.6-Di-tert.-
butyl-4-methylphenol verkapptem Hexamethylendiisocyanat
(HDI) vermischt, granuliert und nachfolgend bei 210°C
während 15 min in einer Presse vernetzt. Nach der Mischungsherstellung ergibt sich eine prozentuale Vernetzung von 0 % und nach dem Preßvorgang von 91 %. Die
Änderung der Schubkraft beträgt 22,3 N bei 210°C, die
Wärmedehnung 14 % bei 200°C/15 min.

Beispiel 5

Ausgangskomponenten: EVA hydr.(2,3 % VAC) - 0,39 % OH
(MFI$_{190/2}$ = 0,2)

                 HDI/$\varepsilon$-Caprolactam (2,75 Gew.-%)
Prozentuale Vernetzung nach Mischungsherstellung:  0 %
                 nach Preßvorgang (230°C/15 min):80%
Änderung der Schubkraft: 11,6 N (230°C)
Wärmedehnung            : 30 %

Beispiel 6

Ausgangskomponenten: EVA hydr. (8,7 % VAC) - 1,7 % OH
($MFI_{190/2} = 0,2$)

HDI/ε-Caprolactam (4,1 Gew.-%)
Prozentuale Vernetzung nach Mischungsherstellung:  0 %
nach Preßvorgang (210°C/15 min):92%
Änderung der Schubkraft: 17,9 N (230°C)
Wärmedehnung        : 24 %

Beispiel 7

Ausgangskomponenten: EVA hydr. (2,3 % VAC) - 0,39 % OH
($MFI_{190/2} = 0,2$)

HDI/Benzophenonoxim (3,6 Gew.-%)
Prozentuale Vernetzung nach Mischungsherstellung:  0 %
nach Preßvorgang (210°C/25 min):    53 %

Beispiel 8

Ausgangskomponenten: EVA hydr. (2,3 % VAC) - 0,39 % OH
($MFI_{190/2} = 0,2$)

MDI/4-tert.Butylphenol (4,75 Gew.-%)
Prozentuale Vernetzung nach Mischungsherstellung:   0 %
nach Preßvorgang (210°C/15 min)    : 91 %
Änderung der Schubkraft: 10,8 N (210°C)
Wärmedehnung        : 14 %

Beispiel 9

Ausgangskomponenten: EVA hydr. (2,3 % VAC) - 0,39 % OH
($MFI_{190/2} = 0,2$)

MDI/4.4'-Thio-bis(3-methyl-6-tert.-
butylphenol (6,35 Gew.-%)
Prozentuale Vernetzung nach Mischungsherstellung:   0 %
nach Preßvorgang (210°C/15 min)    : 85 %
Änderung der Schubkraft: 8,5 N (210°C)

Wärmedehnung                    : 24 %

Beispiel 10

Ausgangskomponenten: EVA hydr. (2,3 % VAC) - 0,39 % OH
($MFI_{190/2}$ = 0,2)
                        TDI dim./m-Kresol (1,24 Gew.-%)
Prozentuale Vernetzung nach Mischungsherstellung:    0 %
                nach Preßvorgang (210$^o$C/15 min)    :  84 %
Änderung der Schubkraft: 8,9 N (200$^o$C)
Wärmedehnung            : 48 %

Beispiel 11

Ausgangskomponenten: EVA hydr. (2,3 % VAC) - 0,39 % OH
($MFI_{190/2}$ = 0,2)
                        TDI dim./$\epsilon$-Caprolactam (1,25 Gew.-%)
Prozentuale Vernetzung nach Mischungsherstellung:    0 %
                nach Preßvorgang (210$^o$C/15 min)    :  76 %
Änderung der Schubkraft: 6,0 N (200$^o$C)
Wärmedehnung            : 116 %

Beispiel 12

Ausgangskomponenten: EVA hydr. (2,5 % VAC) - 0,43 % OH
($MFI_{190/2}$ = 2 )
                        TDI dim./$\epsilon$-Caprolactam (3 Gew.-%)
Prozentuale Vernetzung nach Mischungsherstellung:    0 %
                nach Preßvorgang (230$^o$C/5 min)    :  91 %

Beispiel 13

Ausgangskomponenten: EVA hydr. (2,3 % VAC) - 0,39 % OH
($MFI_{190/2}$ = 0,2)
                        TDI dim./oligomeres 2.2.4-Tri-
                        methyl-1.2-dihydrochinolin(1,53 Gew.-%)

Prozentuale Vernetzung nach Mischungsherstellung:    0 %

nach Preßvorgang (250°C/9 min):        53 %

Beispiel 14

Ausgangskomponenten: EVA hydr. (2,3 % VAC) - 0,39 % OH

$(MFI_{190/2} = 0,2)$

Isophorondiisocyanat (IPDI)/ε-Cap-
rolactam (4,3 Gew.-%)

Prozentuale Vernetzung nach Mischungsherstellung:    0 %

nach Preßvorgang (210°C/15 min)    :  90 %

Änderung der Schubkraft: 16,7 N (230°C)

Wärmedehnung         : 28 %

Beispiel 15

Ausgangskompnenten: EVA hydr. (2,3 % VAC) - 0,39 % OH

$(MFI_{190/2} = 0,2)$

Polyisocyanat auf Basis IPDI/ε- Caprolactam (8,1 Gew.-%)

Prozentuale Vernetzung nach Mischungsherstellung:    0 %

nach Preßvorgang (210°C/15 min)    :  88 %

Änderung der Schubkraft: 14,4 N (230°C)

Wärmedehnung         : 42 %

Beispiel 16

Ausgangskomponenten: EVA hydr. (2,3 % VAC) - 0,39 % OH

$(MFI_{190/2} = 0,2)$

MDI/Benzylalkohol (4,87 Gew.-%)

Prozentuale Vernetzung nach Mischungsherstellung:    0 %

nach Preßvorgang (230°C/15 min)    :  77 %

Änderung der Schubkraft: 7,6 N (230°C)

**Beispiel 17**

Eine Mischung aus EVA hydr. (2,5 % VAC) - 0,43 % OH $(MFI_{190/2} = 2)$, 4,13 Gew.-% eines Vernetzers in Form von mit ε-Caprolactam verkapptem Hexamethylendiisocyanat (HDI) und 0,1 Gew.-% Dibutylzinndilaurat wird mittels eines 45er/20 D Extruders bei 139°C Massetemperatur auf einen $2,2^2$re Kupferleiter extrudiert. Die Isolierwandstärke beträgt 0,8 mm. Bei einer Abzugsgeschwindigkeit von 5 m/min wird die Isolierung in einem 230°C heißen Salzbad innerhalb 50 s drucklos vernetzt. Die Isolierung ist blasenfrei und zeigt eine prozentuale Vernetzung von 91 %.

11 Patentansprüche

0 Figuren

Patentansprüche

1. Verfahren zur Herstellung vernetzter Kabel- und Leitungsisolierungen und -mäntel auf der Basis von Polyolefinen, dadurch gekennzeichnet, daß hydroxylgruppenhaltige Polyolefine in Gegenwart verkappter Polyisocyanate, gegebenenfalls unter Zusatz von Additiven, auf Temperaturen etwa zwischen 150 und 250°C, vorzugsweise etwa zwischen 180 und 230°C, erhitzt werden.

2. Verfahren nach Anspruch 1, dadurch gekennzeichnet, daß der Gehalt an verkapptem Polyisocyanat etwa zwischen 1 und 15 Gew.-%, vorzugsweise etwa zwischen 2 und 8 Gew.-%, beträgt, bezogen auf das Gesamtgewicht.

3. Verfahren nach Anspruch 1 oder 2, dadurch gekennzeichnet, daß Polyolefine mit einem Hydroxylgruppengehalt etwa zwischen 0,1 und 10 Gew.-%, vorzugsweise etwa zwischen 0,1 und 3 Gew.-%, verwendet werden.

4. Verfahren nach einem der Ansprüche 1 bis 3, dadurch gekennzeichnet, daß hydroxylgruppenhaltige Olefincopolymere verwendet werden.

5. Verfahren nach Anspruch 4, dadurch gekennzeichnet, daß durch wenigstens partielle Verseifung von Äthylen-Vinylacetat-Copolymeren erhaltene Olefincopolymere verwendet werden.

6. Verfahren nach einem oder mehreren der Ansprüche 1 bis 4, dadurch gekennzeichnet, daß durch Aufpfropfen olefinisch ungesättigter Alkohole auf Polyolefine erhaltene hydroxylgruppenhaltige Polymere verwendet werden.

7. Verfahren nach einem oder mehreren der Ansprüche 1 bis 6, d a d u r c h   g e k e n n z e i c h n e t , daß mit Phenolen, Alkoholen, Oximen oder sekundären Aminen und vorzugsweise mit Lactamen verkappte Polyisocyanate verwendet werden.

8. Verfahren nach Anspruch 7, d a d u r c h   g e - k e n n z e i c h n e t ,  daß mit phenolischen oder aminischen Oxidationsinhibitoren verkappte Polyisocyanate verwendet werden.

9. Verfahren nach Anspruch 8, d a d u r c h   g e - k e n n z e i c h n e t ,  daß mit oligomerem 2.2.4-Trimethyl-1.2-dihydrochinolin verkappte Polyisocyanate verwendet werden.

10. Verfahren nach einem oder mehreren der Ansprüche 1 bis 9, d a d u r c h   g e k e n n z e i c h n e t , daß zur Freisetzung der Polyisocyanate Katalysatoren, insbesondere tertiäre Amine, metallorganische Verbindungen und/oder Metallsalze, verwendet werden.

# 0041192

**EUROPÄISCHER RECHERCHENBERICHT**

Nummer der Anmeldung

EP 81103924.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 1 719 265 (UPJOHN)<br>+ Seiten 1-13, 40 +<br>-- | 1-10 |
| A | DE - B2 - 1 745 511 (UGINE KUHLMANN)<br>+ Spalte 2, Zeilen 2-34;<br>Spalte 4, Zeilen 7-22 +<br>-- | 1 |
| A | AT - B - 329 655 (SIEMENS)<br>+ Seite 1, Zeile 1 - Seite 2, Zeile 30 +<br>---- | 1 |

**KLASSIFIKATION DER ANMELDUNG (Int Cl )**

H 01 B 13/06
C 08 J 3/24

**RECHERCHIERTE SACHGEBIETE (Int Cl )**

H 01 B 13/00
H 01 B 3/00
C 08 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt |
|---|---|

| Recherchenort | Abschlußdatum der Recherche | Prüfer |
|---|---|---|
| WIEN | 26-08-1981 | KUTZELNIGG |

EPA form 1503.1 06.78